# FASCICULE DE BREVET EUROPEEN

(11) **EP 2 379 317 B1**
(45) Date de publication et mention de la délivrance du brevet: **28.08.2013**
(21) Numéro de dépôt: 09803877.1
(22) Date de dépôt: 16.12.2009
(51) Int. Cl.: B29D 30/06

(54) **GARNITURE DE MOULE POUR PNEUMATIQUE COMPRENANT UN ELEMENT SACRIFICIEL DE LIAISON**
AUSKLEIDUNGSANORDNUNG AUF EINER HAUT EINER REIFENVULKANISIERUNGSFORM
LINING ASSEMBLY ON A SKIN FOR A TYRE VULCANIZATION MOULD

(30) Priorité: 17.12.2008 FR 0858704
(43) Date de publication de la demande: 26.10.2011
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: DUSSEAUX, Jean-Raymond, F-63530 Volvic (FR); WASZKIEWICZ, Arkadiusz, PL-10691 Olsztyn (PL)
(74) Mandataire: Lasson, Cédric Y. M.
(86) Numéro de dépôt international: PCT/FR2009/052570
(87) Numéro de publication internationale: WO 2010/076504

(56) Documents cités:
- EP-A- 0 523 958
- JP-A- 8 103 973
- US-A- 4 553 918

## Description

L'invention concerne le domaine des moules de vulcanisation de pneumatiques, plus particulièrement des moules de type à secteurs.

Un moule à secteurs comprend plusieurs pièces séparées qui, par rapprochement relatif, délimitent un espace de moulage quasi-toroïdal. En particulier, un moule à secteurs comporte deux coquilles latérales pour le moulage des flancs du pneumatique, et plusieurs secteurs périphériques situés entre les coquilles pour le moulage de la bande de roulement du pneumatique. Le rapprochement de toutes ces pièces est assuré sur une cinématique appropriée par un mécanisme voulu. L'ébauche crue du futur pneumatique doit être fermement appliquée et maintenue contre le moule pour obtenir des dimensions géométriques et une architecture précise et pour imprimer la sculpture de la bande de roulement.

Pour former les sculptures de la bande de roulement, les secteurs du moule comprennent des éléments en saillie de la surface radialement intérieure des secteurs, ces éléments formant un négatif des sculptures à mouler.

Pour qu'un même moule puisse être utilisé pour fabriquer des pneumatiques comprenant des formes de sculptures différentes, il est connu, par exemple du document EP 0 523 958, qu'un secteur du moule soit réalisé en plusieurs éléments : d'une part un bloc support ayant une forme générique définissant la courbure generale de la bande de roulement du pneumatique, et d'autre part une pluralité d'éléments de garniture rapportés sur le bloc support et destinés à former les sculptures de la bande de roulement du pneumatique.

Le document US 4553918 - A décrit un moule pour le moulage de pneumatiques et à un procédé de fabrication de ce moule, le moule comprenant une bague profilée qui présente une face circonférentielle interne correspondant au profil externe d'un pneumatique en cours de moulage et englobant au moins la surface ou bande de roulement de ce pneumatique, ainsi qu'une bague à réseau de dessins ou bague alvéolée qui, en contact avec la face circonférentielle interne de ladite bague profilée à laquelle elle est reliée et consistant en un réseau de chevrons et de nervures pour former les creusures du pneumatique moulé, est disposée sur ladite bague profilée.

Le document JP 8103973 - A décrit un moule pour le moulage de pneumatiques, le moule comprenant une pluralité d'éléments en saillie pour former les creusures du pneumatique moulé.

Ainsi, pour adapter un moule à la fabrication d'un pneumatique présentant des sculptures données, il est nécessaire de rapporter différents éléments de garniture sur chaque bloc support des secteurs du moule.

Ces opérations d'adaptation du moule peuvent s'avérer longues et fastidieuses. Aussi, l'invention a notamment pour but de proposer un moule à secteurs pour la vulcanisation d'un pneumatique dont la fabrication et/ou l'adaptation peut être réalisée simplement et rapidement.

A cet effet, l'invention a pour objet un ensemble de garniture comme défini dans la revendication 1, réalisé par frittage laser et comprenant une pluralité d'éléments de garniture destinés à être rapportés sur un bloc support d'un moule pour pneumatique, les éléments de garniture étant destinés à former des sculptures d'une partie d'une bande de roulement d'un pneumatique, l'ensemble comprenant en outre au moins un élément sacrificiel de liaison des éléments de garniture entre eux, les éléments de garniture et l'élément de liaison étant réalisés d'un seul tenant.

Grâce à l'invention, tous les éléments de garniture destinés à être rapportés sur un même bloc support d'un secteur du moule sont liés entre eux, de sorte que l'on peut rapporter tous les éléments de garniture d'un même secteur sur le bloc support en une seule étape.

En outre, l'élément de liaison fait également office d'élément de positionnement relatif des différents éléments de garniture d'un même secteur. Ainsi, il suffit de positionner un seul des éléments de garniture sur le bloc support d'un secteur pour que les autres éléments de garniture soient également correctement positionnés de manière indirecte grâce aux éléments de liaison.

L'élément de liaison est dit sacrificiel car il est destiné à être séparé des éléments de garniture et dissocié de l'ensemble de garniture après que l'ensemble de garniture a été rapporté sur le bloc support du secteur. Ainsi, lors du moulage d'un pneumatique dans un moule comprenant un ensemble selon l'invention, l'élément de liaison n'est pas présent dans le moule. En d'autres termes, l'élément de liaison n'a pas pour fonction de former les sculptures de la bande de roulement du pneumatique mais uniquement de relier les éléments de garniture entre eux avant qu'ils ne soient rapporté sur le bloc support.

L'ensemble est réalisé par fusion sélective par laser plus communément nommé frittage par laser, frittage laser ou SLM (de l'anglais Selective Laser Melting). Les objets sont produits par la fusion sélective de poudres et construits par superposition de couches. L'intérêt de cette technique de fabrication de pièces est que la forme de la pièce peut être modélisée par ordinateur et la pièce peut être facilement fabriquée par frittage sur la base de cette modélisation. En effet, le laser peut être piloté par un ordinateur comprenant une modélisation de la pièce et l'on peut alors fabriquer la pièce par frittage successif de couches de poudre superposées. Dans le cas de la fabrication d'une garniture de moule, cette technique est particulièrement bien adaptée car elle permet de fabriquer des éléments de garniture de petites dimensions tels que des lamelles, des cordons ou des éléments sacrificiels de liaison.

Enfin, l'utilisation du frittage laser permet d'améliorer la séparabilité entre les éléments de garniture reliés entre eux par les éléments sacrificiels. En effet, la frittage laser permet, d'une part, de réaliser des éléments sacrificiels légers et suffisamment rigides pour permettre un positionnement correct des éléments de garniture et, d'autre part, de réaliser des éléments sacrificiels dimensionnés de façon à permettre une séparation facile et rapide des éléments de garniture entre eux.

Un ensemble selon l'invention peut en outre comprendre les caractéristiques suivantes. L'ensemble comprend des amorces de rupture à la jonction entre l'élément de liaison et l'élément de garniture. Ainsi l'élément de liaison peut être désolidarisé des éléments de garniture facilement. L'amorce de rupture peut être par exemple obtenue par une diminution locale d'épaisseur de l'élément de liaison.

L'invention a également pour objet un secteur d'un moule de vulcanisation pour pneumatique comme défini dans la revendication 3, comprenant un bloc support et un ensemble tel que précédemment défini, rapporté sur le bloc support.

L'invention a également pour objet un moule de vulcanisation pour pneumatique comme défini dans la revendication 4, comprenant deux coquilles latérales et une pluralité de secteurs tels que précédemment définis, les secteurs étant répartis circonférentiellement en bordure des coquilles.

L'invention a également pour objet un procédé d'obtention d'un moule de vulcanisation pour pneumatique comme défini dans la revendication 5, comprenant les étapes suivantes :
- fabrication d'un ensemble de garniture tel que précédemment défini.
- fixation de l'ensemble de garniture à un bloc support,
- suppression de l'élément sacrificiel.

Ainsi, le procédé d'obtention ou d'adaptation du secteur du moule de vulcanisation est particulièrement simple puisqu'il ne nécessite qu'une seule étape de positionnement de l'ensemble de garniture par rapport au bloc support et de fixation de cet ensemble de garniture. Il n'est pas nécessaire, comme dans l'état de la technique, de positionner les uns après les autres les différents éléments de garniture sur le bloc support.

Une fois que cette étape de fixation a été mise en oeuvre, il suffit de supprimer le ou les éléments sacrificiels qui n'ont pas pour but de former des sculptures de la bande de roulement du pneumatique mais uniquement de maintenir entre eux les différents éléments de garniture lors de leur assemblage sur le bloc support.

Le procédé de l'invention peut en outre comprendre la caractéristique selon laquelle l'ensemble de garniture est obtenu par frittage laser. Comme mentionné précédemment, la technique du frittage laser permet de concevoir un ensemble de garniture d'un seul tenant selon une forme désirée à partir d'une poudre métallique. Alors que, dans l'état de la technique, les différents éléments de garniture présentent de petites dimensions pour faciliter leur fabrication, la technique du frittage laser permet de réaliser un ensemble de garniture de grandes dimensions et de forme complexe, comprenant notamment différents types de nervures ou de lamelles d'épaisseurs données.

Avantageusement, l'ensemble de garniture est fixé au bloc support par collage, vissage ou clipsage. Des formes avantageuses de l'invention sont definies dans les revendications dépendantes.

L'invention sera mieux comprise à la lecture de la description qui va suivre faite uniquement en se référant aux figures annexées dans lesquelles :
- la figure 1 est une vue en perspective d'un secteur de moule de vulcanisation pour pneumatique, selon l'invention, à une étape préliminaire de sa fabrication,
- la figure 2 est une vue en perspective du secteur de la figure 1, à une étape intermédiaire de sa fabrication,
- la figure 3 est une vue en perspective du secteur de la figure 2 à l'issue de sa fabrication.

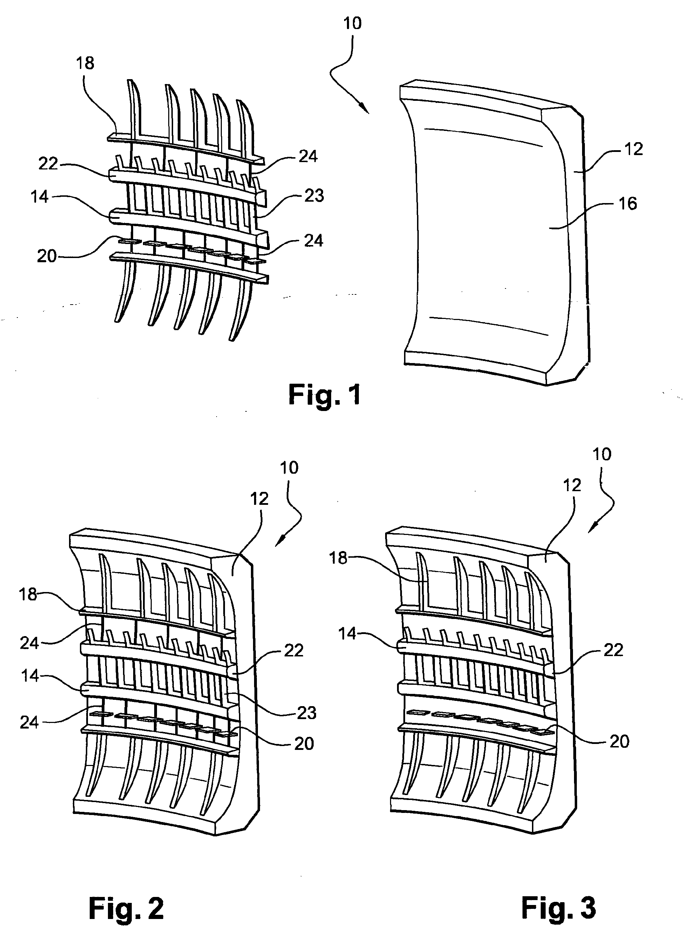

On a représenté sur la figure 1 un secteur, désigné par la référence générale 10, d'un moule de vulcanisation (non-représenté) pour pneumatique, à un stade préliminaire de sa fabrication.

Un moule à secteurs pour la vulcanisation d'un pneumatique comprend une pluralité de secteurs identiques ou semblables à celui représenté sur la figure 1. Les secteurs sont disposés les uns à côté des autres de manière circonférentielle, et définissent ainsi un cylindre pour le moulage de la bande de roulement du pneumatique.

Un secteur 10 donné est donc destiné à former une partie de la bande de roulement du pneumatique.

Le secteur 10 comprend un bloc support 12 et un ensemble 14 de garniture rapporté sur le bloc support 12.

Le bloc support 12, réalisé par exemple en acier massif, comprend notamment une surface radialement intérieure 16 formant support pour l'ensemble 14 de garniture. La surface 16 est sensiblement lisse et sa forme générale est sensiblement identique à celle de la partie de la bande de roulement du pneumatique qui est en regard de ce bloc support lors du moulage. En d'autres termes, la surface 16 présente des courbures dans un plan radial comprenant l'axe du pneumatique et dans un plan radial normal à l'axe du pneumatique, sensiblement identiques à celles du pneumatique.

L'ensemble 14 de garniture comprend une pluralité d'éléments 18 de garniture destinés à former des sculptures de la partie de la bande de roulement du pneumatique, en regard du secteur 10.

Les éléments 18 comprennent notamment des lamelles circonférentielles 20, des cordons circonférentiels 22, ou des lamelles axiales 23 reliant les cordons 22 entre eux.

La plupart des éléments de garniture 18 sont reliés les uns aux autres et forment un treillis, comme par exemple les cordons 22 avec les lamelles axiales 23. Certains éléments comme les lamelles circonférentielles sont en revanche dissociés des autres éléments 18.

L'ensemble 14 de garniture comprend en outre des éléments sacrificiels 24 de liaison de certains éléments de garniture 14 entre eux. Ces éléments sacrificiels 24 se présentent sous la forme de nervures de faible épaisseur formant des ponts de liaison des différents éléments 18 de garniture.

En particulier, comme représenté sur la figure 1, des éléments de liaison 24 relient à un cordon 22 les lamelles 20 qui sont dissociées des autres éléments 18.

Ainsi, grâce aux éléments de liaison 24, l'ensemble 14 des éléments de garniture 18 d'un même secteur forme un réseau connexe de sorte que l'ensemble 14 ne comprend qu'une seule pièce. Les éléments de liaison ne sont pas destinés à former des sculptures de la bande de roulement du pneumatique mais uniquement à relier les différents éléments de garniture entre eux.

L'ensemble 14 de garniture est destiné à être rapporté sur la surface 16 radialement intérieure du bloc support 12 de manière à former le secteur 10. Pour cela, au cours d'une première étape, on rapporte en une seule opération tous les éléments 18 de garniture de l'ensemble 14 sur le bloc support 12 pour obtenir le secteur 10 intermédiaire représenté sur la figure 2. Les éléments 18 peuvent être rapportés en une seule opération car l'ensemble 14 ne comprend qu'une seule pièce.

Puis, on positionne l'ensemble 14 par rapport au bloc support 12.

Une fois que l'ensemble 14 de garniture est correctement positionné sur la surface 16, on procède à la fixation de cet ensemble 14 sur le bloc support 12. Cette fixation peut être réalisée par exemple par collage, vissage ou par clipsage.

Puis, au cours d'une étape suivante, on supprime du secteur 10 les éléments sacrificiels 24 de liaison afin d'obtenir un secteur 10 conforme à celui représenté sur la figure 3. On constate que, sur ce secteur 10, les différents éléments 18 de garniture de l'ensemble 14 ne sont plus tous reliés les uns aux autres sous la forme d'un réseau connexe. En particulier, les lamelles 20 sont dissociées des cordons circonférentiels 22.

Cette étape de suppression des éléments sacrificiels de liaison 14 peut être réalisée de manière simple en cassant ces éléments de liaison 24 au niveau de leur jonction avec les éléments 18 de garniture. Pour faciliter cette opération de cassage, on peut, soit réaliser des éléments de liaison 24 les plus fins possible de manière à les rendre fragiles, soit par exemple créer des diminutions d'épaisseur de ces éléments de liaison 24 au niveau de leur jonction avec les éléments 18 de garniture de manière à faciliter et à guider leur séparation.

De préférence, l'ensemble 14 de garniture représenté sur la figure 1 est réalisé par frittage laser. Cette technique permet de fabriquer cet ensemble 14 d'un seul tenant de manière relativement simple en agrégeant successivement des couches de poudre de matériau métallique.

L'invention a été décrite en relation à un moule à secteurs. Toutefois, cette invention peut également être mise en oeuvre sur un autre type de moule pour vulcanisation de pneumatiques.

## Revendications

1. Ensemble (14) de garniture, **caractérisé en ce qu'**il est réalisé par frittage laser et **en ce qu'**il comprend une pluralité d'éléments (18) de garniture destinés à être rapportés sur un bloc support (12) d'un moule pour pneumatique, les éléments de garniture (18) étant destinés à former des sculptures d'une partie d'une bande de roulement d'un pneumatique, l'ensemble (14) comprenant en outre au moins un élément sacrificiel (24) de liaison des éléments (18) de garniture entre eux, les éléments (18) de garniture et l'élément de liaison (24) étant réalisés d'un seul tenant

2. Ensemble (14) selon la revendication précédente, comprenant des amorces de rupture à la jonction entre l'élément de liaison (24) et l'élément de garniture (18).

3. Secteur (10) d'un moule de vulcanisation pour pneumatique, **caractérisé en ce qu'**il comprend un bloc support (12) et un ensemble (14) selon l'une quelconque des revendications précédentes, rapporté sur le bloc support (12).

4. Moule de vulcanisation pour pneumatique **caractérisé en ce qu'**il comprend deux coquilles latérales et une pluralité de secteurs (10) selon la revendication précédente, les secteurs (10) étant répartis circonférentiellement en bordure des coquilles.

5. Procédé d'obtention d'un moule de vulcanisation pour pneumatique, **caractérisé en ce qu'**il comprend les étapes suivantes :
- fabrication d'un ensemble de garniture (14) selon l'une quelconque des revendications 1 à 2,
- fixation de l'ensemble de garniture (14) à un bloc support (12),
- suppression de l'élément sacrificiel (24).

6. Procédé selon la revendication précédente, dans lequel l'ensemble de garniture (14) est obtenu par frittage laser.

7. Procédé selon l'une quelconque des deux revendications précédentes, dans lequel l'ensemble de garniture (14) est fixé au bloc support (12) par collage, vissage ou clipsage.

## Patentansprüche

1. Einsatzeinheit (14), **dadurch gekennzeichnet, dass** sie durch Lasersintern hergestellt wird, und dass sie eine Vielzahl von Einsatzelementen (18) enthält, die dazu bestimmt sind, an einen Trägerblock (12) einer Form für einen Luftreifen angefügt zu werden, wobei die Einsatzelemente (18) dazu bestimmt sind, Profile eines Teils eines Laufstreifens eines Luftreifens zu formen, wobei die Einheit (14) außerdem mindestens ein Opferelement (24) zur Verbindung der Einsatzelemente (18) miteinander enthält, wobei die Einsatzelemente (18) und das Verbindungselement (24) aus einem Stück hergestellt werden.

2. Einheit (14) nach dem vorhergehenden Anspruch, die Sollbruchstellen an der Verbindung zwischen dem Verbindungselement (24) und dem Einsatzelement (18) enthält.

3. Sektor (10) einer Vulkanisierungsform für einen Luftreifen, **dadurch gekennzeichnet, dass** er einen Trägerblock (12) und eine Einheit (14) nach einem der vorhergehenden Ansprüche enthält, die an den Trägerblock (12) angefügt ist.

4. Vulkanisierungsform für einen Luftreifen, **dadurch gekennzeichnet, dass** sie zwei seitliche Schalen und eine Vielzahl von Sektoren (10) nach dem vorhergehenden Anspruch enthält, wobei die Sektoren (10) in Umfangsrichtung am Rand der Schalen verteilt sind.

5. Verfahren zum Erhalt einer Vulkanisierungsform für einen Luftreifen, **dadurch gekennzeichnet, dass** es die folgenden Schritte enthält:
- Herstellung einer Einsatzeinheit (14) nach einem der Ansprüche 1 bis 2,
- Befestigung der Einsatzeinheit (14) an einem Trägerblock (12),
- Entfernen des Opferelements (24).

6. Verfahren nach dem vorhergehenden Anspruch, wobei die Einsatzeinheit (14) durch Lasersintern erhalten wird.

7. Verfahren nach einem der zwei vorhergehenden Ansprüche, wobei die Einsatzeinheit (14) am Trägerblock (12) durch Kleben, Schrauben oder Schnappverbindung befestigt wird.

## Claims

1. Lining assembly (14), **characterized in that** it is produced by laser sintering and **in that** it comprises a plurality of lining elements (18) intended to be attached to a support block (12) of a mould for a tyre, the lining elements (18) being intended to form tread blocks of part of a tread strip of a tyre, the assembly (14) further comprising at least one sacrificial connecting element (24) joining the lining elements (18) together, the lining elements (18) and the connecting element (24) being produced as a single piece.

2. Assembly (14) according to the preceding claim, comprising rupture initiators where the connecting element (24) joins the lining element (18).

3. Segment (10) of a tyre vulcanizing mould, **characterized in that** it comprises a support block (12) and an assembly (14) according to any one of the preceding claims, attached to the support block (12).

4. Tyre vulcanizing mould, **characterized in that** it comprises two lateral shells and a plurality of segments (10) according to the preceding claim, the segments (10) being circumferentially distributed around the edge of the shells.

5. Method of obtaining a tyre vulcanizing mould, **characterized in that** it comprises the following steps:
- the manufacturing of a lining assembly (14) according to either one of Claims 1 and 2,
- attaching the lining assembly (14) to a support block (12),
- eliminating the sacrificial element (24).

6. Method according to the preceding claim, in which the lining assembly (14) is obtained by laser sintering.

7. Method according to either one of the two preceding claims, in which the lining assembly (14) is attached to the support block (12) by bonding, screwing or clipping.
